# EUROPÄISCHE PATENTSCHRIFT

(11) **EP 2 209 729 B1**
(45) Veröffentlichungstag und Bekanntmachung des Hinweises auf die Patenterteilung: **18.01.2017**
(21) Anmeldenummer: 08843822.1
(22) Anmeldetag: 27.10.2008
(51) Int. Cl.: G06K 7/10, B66B 1/46

(54) **VERFAHREN ZUR FESTLEGUNG EINES ZIELRUFES ZUR BENUTZUNG EINER AUFZUGSANLAGE UND EINE AUFZUGSANLAGE**
METHOD FOR DETERMINING A TARGET CALL FOR USING A LIFT FACILITY AND LIFT FACILITY
PROCÉDÉ DESTINÉ À LA FIXATION D'UN APPEL CIBLE EN VUE DE L'UTILISATION D'UNE INSTALLATION D'ASCENSEUR ET INSTALLATION D'ASCENSEUR

(30) Priorität: 29.10.2007 EP 07119449
(43) Veröffentlichungstag der Anmeldung: 28.07.2010
(73) Patentinhaber: Inventio AG, 6052 Hergiswil (CH)
(72) Erfinder: GERSTENKORN, Bernhard, CH-6030 Ebikon (CH); OTTIGER, Daniel, CH-6012 Obernau/LU (CH)
(86) Internationale Anmeldenummer: PCT/EP2008/064556
(87) Internationale Veröffentlichungsnummer: WO 2009/056525

(56) Entgegenhaltungen:
- EP-A- 0 341 381
- WO-A-2006/059983
- US-A- 6 108 535
- US-A1- 2003 080 851
- US-A1- 2003 098 776
- US-A1- 2007 026 802
- US-A1- 2007 045 051
- US-B1- 6 382 363

## Beschreibung

Die Erfindung betrifft ein Verfahren zur Festlegung eines Zielrufes zur Benutzung einer Aufzugsanlage mit einer Steuereinheit und wenigstens einer Zielrufeinrichtung. Ferner betrifft die Erfindung eine Aufzugsanlage.

Das Dokument WO 2006/059983 A2 beschreibt eine Möglichkeit zur Eingabe eines Zielrufes mittels einer Kommunikationseinheit zur Ausführung einer Aufzugsfahrt.

Das Dokument US 2003/0080851 A1 beschreibt eine Möglichkeit zur Eingabe eines Zielrufes mittels einer Kommunikationseinheit zur Ausführung einer Aufzugsfahrt.

Das Dokument US 2003/0098776 A1 beschreibt ein Verfahren zur Sicherheitsüberwachung und zum Transport von Personen in einem Aufzugssystem. Aufgrund eines von einer Kommunikationseinheit gesendeten Identifikationscodes wird ein Vergleich mit einem gespeicherten Code durchgeführt. Wenn der Vergleich erfolgreich ist, wird eine Autorisation für das Aufzugssystem gegeben.

Das Dokument US 6382363 B1 beschreibt eine Möglichkeit zur Auswahl eines Zielstockwerkes mittels einer Kommunikationseinheit. Ein vom System bereitgestelltes Ziel kann über Tasten einer Zielrufeinheit geändert werden.

Aus der EP 0 699 617 A1 ist eine Aufzugsanlage mit einer Erkennungsvorrichtung zum Erkennen von auf Stockwerken abgegebenen Rufen bekannt. Eine Steuereinheit ermittelt mittels eines Zuteilungsalgorithmus einen geeigneten Aufzug zur Bedienung des gewünschten Zielrufes und zeigt diesen mittels einer Anzeigevorrichtung oder akustisch dem Aufzugsbenutzer an. Die Erkennungsvorrichtung ist eingerichtet, um selbsttätig Daten von einem von dem Benutzer mitgeführten Informationsgeber zu lesen und an die Steuereinheit weiterzuleiten. Wenn der Benutzer jedoch ein anderes Fahrziel als das von der Anzeigeeinheit bekannt gegebene Fahrziel wählen möchte, muss er dies mittels einer Tasteneingabe an der Erkennungsvorrichtung tun. Hierbei ergibt sich der Nachteil, dass die Erkennungsvorrichtung eine öffentlich zugängliche Vorrichtung ist, die von einer Vielzahl von Personen benutzt wird, wodurch insbesondere durch das Berühren mit den Fingern die Gefahr besteht, dass Krankheiten übertragen werden.

Der Erfindung liegt die **Aufgabe** zugrunde, ein Verfahren zur Festlegung eines Zielrufes zur Benutzung einer Aufzugsanlage anzugeben, bei dem die Festlegung des Zielrufes unter weitgehender Vermeidung der Berührung von Bedieneinheiten möglich ist. Ferner soll eine zugehörige Aufzugsanlage angegeben werden.

Zur **Lösung** dieser Aufgabe ist bei einem Verfahren zur Festlegung eines Zielrufes zur Benutzung einer Aufzugsanlage mit einer Steuereinheit und wenigstens einer Zielrufeinrichtung in Übereinstimmung mit Anspruch 1 erfindungsgemäss vorgesehen, dass das Verfahren folgende Schritte umfasst:
Aktivieren einer Datenkommunikation zwischen der Zielrufeinrichtung und einer von dem Benutzer mitgeführten Kommunikationseinheit innerhalb einer bestimmten Reichweite eines Funkfeldes und der Kommunikationseinheit;
   - Positionieren der mitgeführten Kommunikationseinheit durch ein Bewegen oder im Wesentlichen Ruhighalten im Funkfeld;
   - Erfassen einer Positionsveränderung der Kommunikationseinheit als mehr oder weniger starkes Funksignal;
   - Umsetzen dieser erfassten Funksignals in wenigstens ein Zielrufauswahlsignal.

Das erfindungsgemässe Verfahren beruht auf der Erkenntnis, dass der Benutzer alleine durch Positionsveränderung der Kommunikationseinheit interaktiv und berührungslos aus mehreren von der Zielrufeinrichtung oder der Steuereinheit ermittelten Zielrufen einen bestimmten Zielruf auswählen kann.

Infolge dieser berührungslosen Auswahlmöglichkeit des Zielrufes beziehungsweise des Fahrzieles, wird der Kontakt mit der von einer Vielzahl von Personen benutzten Zielrufeinrichtung vermieden. Dies erweist sich als hygienisch vorteilhaft, so dass insbesondere keine Krankheiten übertragen werden können.

Vorteilhafte Weiterbildungen des erfindungsgemässen Verfahrens sind in den abhängigen Ansprüchen des Verfahrens beschrieben.

Bei einer bevortzugten Weiterbildung des Verfahrens wird ein Benutzer durch ein Bewegen oder im Wesentlichen Ruhighalten positioniert. Ein Bewegen des Benutzers wird als positives oder negatives Bewegungssignal erfasst. Das erfasste Bewegungssignal wird in ein Zielrufauswahlsignal umgesetzt. Unter "Positionsveränderung" des Benutzers und/oder der Kommunikationseinheit soll im Rahmen der vorliegenden Erfindung verstanden werden, dass der gewünschte Zielruf dadurch ausgewählt und hierzu gegebenenfalls vorab verändert werden kann, in dem der Benutzer und/oder die Kommunikationseinheit bewegt oder im Wesentlichen ruhig gehalten wird/werden. Das Ausmass der Bewegung und/oder des Ruhighaltens können sich im Bereich vorgegebener räumlicher und/oder zeitlicher Grenzen bewegen.

Bei einer vorteilhaften Weiterbildung des Verfahrens ist vorgesehen, dass die Zielrufeinrichtung mit wenigstens einem Bewegungssensor ausgerüstet ist und der Benutzer seine Position derart verändert, das heisst sich bewegt oder ruhig verhält, dass der Bewegungssensor ein positives oder negatives Bewegungssignal erfasst.

In einer weiteren vorteilhaften Weiterbildung des Verfahrens ist vorgesehen, dass die Kommunikationseinheit vom Benutzer so im Funkfeld positioniert wird, das heisst bewegt oder ruhig gehalten wird, dass die Zielrufeinrichtung ein mehr oder weniger starkes Funksignal von der Kommunikationseinheit erfasst.

Die Positionsveränderung des Benutzers und/oder der Kommunikationseinheit wird somit von der Zielrufeinrichtung als positives oder negatives Bewegungssignal bzw. als mehr oder weniger starkes Funksignal erfasst und in ein Zielrufauswahlsignal umgesetzt. Hierzu umfasst die Zielrufeinrichtung vorzugsweise einen Bildschirm, auf dem die Zielrufeinrichtung mehrere Felder mit möglichen Zielrufen an den Benutzer bekannt gibt. Beispielsweise wird jedem Feld ein Zielruf zugeordnet. Gemäss dem Zielrufauswahlsignal wird beispielsweise ein Zeiger beziehungsweise Cursor über die Felder mit möglichen Zielrufen geführt und über einem gewünschten Zielruf gestoppt. Beispielsweise wird der Zeiger über die Felder mit möglichen Zielrufen geführt, solange ein negatives Bewegungssignal bzw. ein starkes Funksignal erfasst wird und der Zeiger stoppt seinen Lauf über die Felder mit möglichen Zielrufen, sobald ein positives Bewegungssignal bzw. ein schwaches Funksignal erfasst wird. Durch das Stoppen des Zeigers wird ein Feld markiert und die Auswahl eines zugeordneten Zielrufes getätigt. Beispielsweise wird der Zeiger nach einem vorbestimmten Zeitintervall in einer bestimmten Reihenfolge über die einzelnen Felder geführt.

Das erfindungsgemässe Verfahren ermöglicht es dem Benutzer durch Positionsveränderung des Benutzers und/oder der Kommunikationseinheit eine eigene Auswahl eines von ihm bevorzugten Zielrufes zu treffen, so dass er keinen von der Zielrufsteuerung unter rein logistischen und ökonomischen Gesichtspunkten rechnerisch ermittelten Aufzug vorgegeben bekommt. Der Benutzer kann somit denjenigen Zielruf auswählen, der seinen individuellen Bedürfnissen am besten entspricht und der aus seiner Sicht für die jeweilige Situation vorzuziehen ist.

Als Kommunikationseinheit kann ein mobiles, von dem Benutzer mitführbares Kommunikationsmittel, vorzugsweise ein Mobiltelefon oder eine berührungslos lesbare RFID-Karte verwendet werden.

Das Funkfeld ist vorzugsweise ein Nahfunkfeld. Die Reichweite des Nahfunkfeldes beträgt vorzugsweise weniger als etwa 10 Meter, vorzugsweise weniger als 1 Meter.

Vorteilhafterweise kann der Zielruf auch dadurch ausgewählt werden, dass die Kommunikationseinheit aus einem Nahfunkfeld heraus bewegt wird, wobei derjenige Zielruf aus mehreren Feldern mit möglichen Zielrufen auf dem Bildschirm ausgewählt wird, dessen zugeordnetes Feld zuletzt von dem Zeiger markiert worden ist. Mit anderen Worten wird durch eine Unterbrechung der Kommunikation zwischen Kommunikationseinheit und Zielrufeinrichtung der Zeiger beziehungsweise Cursor angehalten und das Fahrziel bzw. der Zielruf ausgewählt, in dessen zugeordneten Feld sich der Zeiger auf dem Bildschirm befindet.

In bevorzugter Weiterbildung des Verfahrens erfolgt ein selbsttätiges Erfassen eines Bewegungssignals des Benutzers durch den Bewegungssensor. Analog erfolgt eine Aktivierung der Datenkommunikation zwischen der Zielrufeinrichtung und der Kommunikationseinheit innerhalb des Nahfunkfeldes selbsttätig beziehungsweise automatisch. Wahlweise kann die Aktivierung auch durch Betätigung der Kommunikationseinheit innerhalb des Nahfunkfeldes erfolgen. Auf diese Weise kann eine vollständig berührungslose Benutzung der Aufzugsanlage, das heisst insbesondere ohne Berührung der Zielrufeinrichtung, erfolgen.

So wird die Datenkommunikation nach Annähern an die Zielrufeinrichtung automatisch aufgebaut, der Benutzer automatisch erkannt und ebenso automatisch die mehreren Zielrufe ermittelt. Sodann kann die Zielrufeinrichtung eine Zielrufliste mit einer vorbestimmten Reihenfolge der Zielrufe bekannt gegeben und den in der Zielrufliste an erster Stelle angeführten Zielruf vormarkieren. Falls sich der Benutzer für den vormarkierten Zielruf entscheidet, wird dieser automatisch ausgewählt und an die Steuereinheit weitergeleitet.

Vorzugsweise handelt es sich bei dem Bildschirm um einen Touchscreen-Bildschirm, der als Zielrufterminal fungiert, so dass die Auswahl auch durch Betätigung beispielsweise einer Tastatur der Zielrufeinrichtung möglich ist. Dies erweist sich beispielsweise dann als vorteilhaft, wenn ein von dem Benutzer mitgeführtes Mobiltelefon als Kommunikationseinheit aufgrund eines leeren Akku nicht im Betrieb ist.

Gemäss einer weiteren bevorzugten Ausgestaltung werden die Zielrufe akustisch, optisch und/oder durch Vibration mittels der Kommunikationseinheit und/oder der Zielrufeinrichtung angezeigt.

In bevorzugter Ausgestaltung wird ein Identifikationssignal zur Identifikation des Benutzers vom Benutzer und/oder von der Kommunikationseinheit an die Zielrufeinrichtung übermittelt. Vorzugsweise gibt der Benutzer hierzu einen Identifikationscode an einem Terminal ein, welcher eingegebene Identifikationscode als Identifikationssignal an die Zielrufeinrichtung übermittelt wird und/oder die Kommunikationseinheit sendet ein Identifikationssignal an die Zielrufeinrichtung. Das Terminal kann ein Zielrufterminal einer Aufzugsanlage sein, an dem Aufzugsrufe wie Zielrufe beispielsweise durch Spracherkennung und/oder als biometrisches Signal und/oder über eine Tastatur eingebbar sind oder das Terminal kann die Kommunikationseinheit selber sein, beispielsweise ein Mobiltelefon. Die Übermittlung eines Identifikationssignals von der Kommunikationseinheit an die Zielrufeinrichtung kann beispielsweise gleich nach Aktivierung der Datenkommunikation zwischen Zielrufeinrichtung und Kommunikationseinheit erfolgen.

Die Zielrufeinrichtung überprüft das übermittelte Identifikationssignal und führt die Ermittlung der mehreren möglichen Zielrufe nur dann durch und gibt die ermittelten möglichen Zielrufe nur dann an den Benutzer und/oder die Kommunikationseinheit bekannt, wenn die Überprüfung des Identifikationssignals erfolgreich ist.

Ferner kann alternativ oder zusätzlich ein Zugangsberechtigungscode vom Benutzer und/oder von der Kommunikationseinheit an die Zielrufeinrichtung übermittelt werden und daraufhin von der Zielrufeinrichtung überprüft werden, ob der Benutzer eine Zugangsberechtigung zum Gebäude hat. Beispielsweise kann die Berechtigung nur zu bestimmten Zeiten oder nur für bestimmte Bereiche innerhalb eines Gebäudes erteilt werden. Die mehreren möglichen Zielrufe werden nur dann von der Zielrufeinrichtung ermittelt und die ermittelten möglichen Zielrufe werden nur dann an den Benutzer bekannt gegeben, wenn die Überprüfung der Zutrittsberechtigung erfolgreich ist.

Von Vorteil ist ferner, wenn Informationen zur Führung des Benutzers zu einem Aufzug an die Zielrufeinrichtung und/oder die Kommunikationseinheit übermittelt werden. Dies erfolgt vorteilhafterweise nach Übermittlung des ausgewählten Zielrufs an die Steuereinheit, so dass sich der Benutzer anhand dieser Informationen zu dem zur Bedienung des Zielrufes vorgesehenen Aufzug bewegen kann, während dieser in das Stockwerk verfahren wird, in welchem der Benutzer den Aufzug betreten wird. Diese Informationen können an die Zielrufeinrichtung und/oder direkt an die Kommunikationseinheit übermittelt werden. Die Informationen können dem Benutzer beispielsweise akustisch und/oder optisch mitgeteilt werden.

Hinsichtlich der Ermittlung, der Bekanntgabe und der Auswahl des Zielrufes bzw. der Zielrufe ist bevorzugt vorgesehen, dass von der Zielrufeinrichtung wenigstens einer der Zielrufe empfohlen wird. Dies kann beispielsweise der am häufigsten von dem jeweiligen Benutzer gewählte Zielruf sein. Ferner können die Zielrufe grösster Wahrscheinlichkeit bekannt gegeben werden. Zudem kann eine beschränkte Anzahl an Zielrufen von der Zielrufeinrichtung bekannt gegeben werden. Um die Auswahl weiter zu vereinfachen, kann vorzugsweise vorgesehen werden, dass die ermittelten Zielrufe automatisch in einer vorbestimmten Reihenfolge nacheinander markiert werden. Vorzugsweise erfolgt dies durch eine farbliche Hinterlegung der die verschiedenen Zielrufe darstellenden Felder auf einem Bildschirm. Hierbei kann die farbliche Hinterlegung über einen gewissen Zeitraum, beispielsweise ein bis zwei Sekunden für jedes einzelne Feld erfolgen. Um beispielsweise diejenigen Zielrufe mit der grössten Häufigkeit feststellen zu können, werden die ermittelten und/oder bekannt gegebenen Zielrufe gespeichert. Auf diese Weise lässt sich ein Fahrtenprofil erstellen, das die Auswahl des Zielrufes für den Benutzer weiter vereinfacht. Vorzugsweise werden die Zielrufe in abgestufter Reihenfolge mit den grössten Wahrscheinlichkeiten bekannt gegeben.

Überdies wird zur Lösung der oben genannten Aufgabe eine Aufzugsanlage mit wenigstens einem Aufzug, einer Steuereinheit und wenigstens einer Zielrufeinrichtung vorgeschlagen. Die Zielrufeinrichtung gibt mehrere mögliche Zielrufe an den Benutzer bekannt. Die Zielrufeinrichtung umfasst eine Auswähleinheit mittels der ein Zielruf gemäss wenigstens einem Zielrufauswahlsignal auswählbar ist. Die Zielrufeinrichtung umfasst eine Funkeinrichtung, wobei die Funkeinrichtung innerhalb einer bestimmten Reichweite eines Funkfeldes der Funkeinrichtung eine Datenkommunikation zwischen der Funkeinrichtung und einer vom Benutzer mitgeführten Kommunikationseinheit aktiviert. Die Funkeinrichtung erfasst eine Positionsveränderung der Kommunikationseinheit als mehr oder weniger starkes Funksignal. Die Zielrufeinrichtung setzt das Funksignal in ein Zielrufauswahlsignal um.

Die erfindungsgemässe Aufzugsanlage macht sich die Vorteile des oben beschriebenen Verfahrens zu Nutze. Infolge der Positionsveränderung der Kommunikationseinheit kann auf einfache Weise berührungslos das gewünschte Fahrziel, d. h. der Zielruf ausgewählt werden.

Vorteilhafte Ausführungsformen der erfindungsgemässen Aufzugsanlage sind in den abhängigen Ansprüchen der Aufzugsanlage beschrieben.

Bei einer bevorzugten Ausführung erfasst ein Bewegungssensor ein Bewegen des Benutzers als positives oder negatives Bewegungssignal.

Bei einer bevorzugten Ausführungsform umfasst die Zielrufeinrichtung einen Bildschirm, auf dem mehrere den Zielrufen zugeordneten Felder abbildbar sind, wobei mittels der Auswähleinheit ein Zeiger gemäss einem Zielrufauswahlsignal auf dem Bildschirm abbildbar und zu einem der Felder bewegbar ist, um einen Zielruf auszuwählen.

Vorteilhafterweise ist die Auswähleinheit derart eingerichtet, dass der Zeiger nach einem vorbestimmten Zeitintervall selbsttätig von einem ersten Feld zu einem zweiten Feld bewegt wird. Insbesondere in diesem Zusammenhang kann die Zielrufeinrichtung eine Zeiteinheit umfassen, die erkennt über welche Zeitdauer der Zeiger in einem Feld des Bildschirms verbleibt. Vorteilhafterweise ist die Auswähleinheit beziehungsweise Zeigereinheit derart eingerichtet, dass nach Ablauf einer vorgegebenen Zeitdauer, in der der Zeiger beziehungsweise das Zeigersymbol innerhalb eines Feldes verbleibt, automatisch der diesem Feld zugeordnete Zielruf ausgewählt wird.

Bei einer bevorzugten Ausgestaltung sind mehrere Zielrufeinrichtungen vorgesehen sind, wobei im Bereich jedes Aufzuges und/oder jedes Stockwerkes des Aufzuges wenigstens eine Zielrufeinrichtung angeordnet ist. So kann beispielsweise bei einer Aufzugsanlage mit einem Aufzug auf jedem Stockwerk eine Zielrufeinrichtung und bei einer Aufzugsanlage mit mehreren Aufzügen eine der Anzahl der Aufzüge entsprechende Anzahl von Zielrufeinrichtungen auf jedem Stockwerk vorgesehen werden.

Nachfolgend wird die Erfindung unter Bezugnahme auf die Figuren in Ausführungsbeispielen weiter erläutert. Dabei zeigten schematisch
- Fig. 1: einen Ausschnitt eines Gebäudes mit einer Aufzugsanlage mit drei Zielrufeinrichtungen mit einem ersten Ausführungsbeispiel wo ein Benutzer mittels einer vom Benutzer mitgeführten Kommunikationseinheit berührungslos einen Zielruf auswählt,
- Fig. 2: eine Anzeigeeinrichtung der Zielrufeinrichtungen im Ausführungsbeispiel gemäss Fig. 1,
- Fig. 3: einen Ausschnitt eines Gebäudes mit einer Aufzugsanlage mit drei Zielrufeinrichtungen mit einem zweiten Ausführungsbeispiel wo ein Benutzer durch Veränderung seiner Position berührungslos einen Zielruf auswählt, und
- Fig. 4: einen Ausschnitt eines Gebäudes mit einer Aufzugsanlage mit einer Zielrufeinrichtung mit einem dritten Ausführungsbeispiel wo ein Benutzer mittels einer vom Benutzer mitgeführten Kommunikationseinheit berührungslos einen Zielruf auswählt.

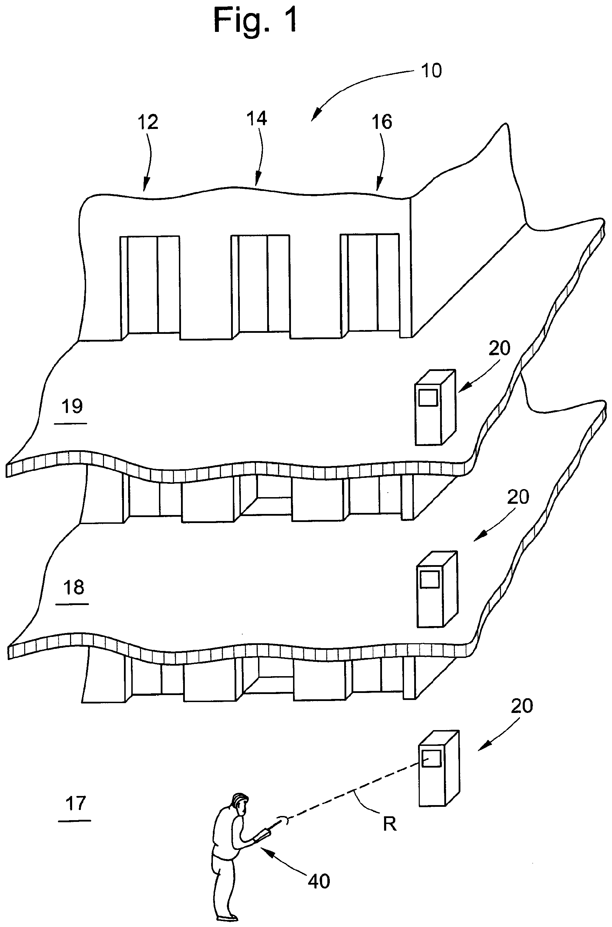

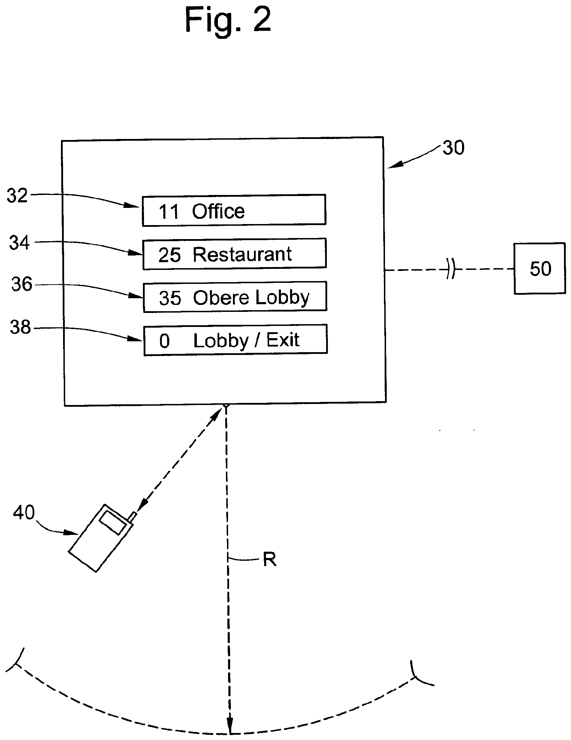

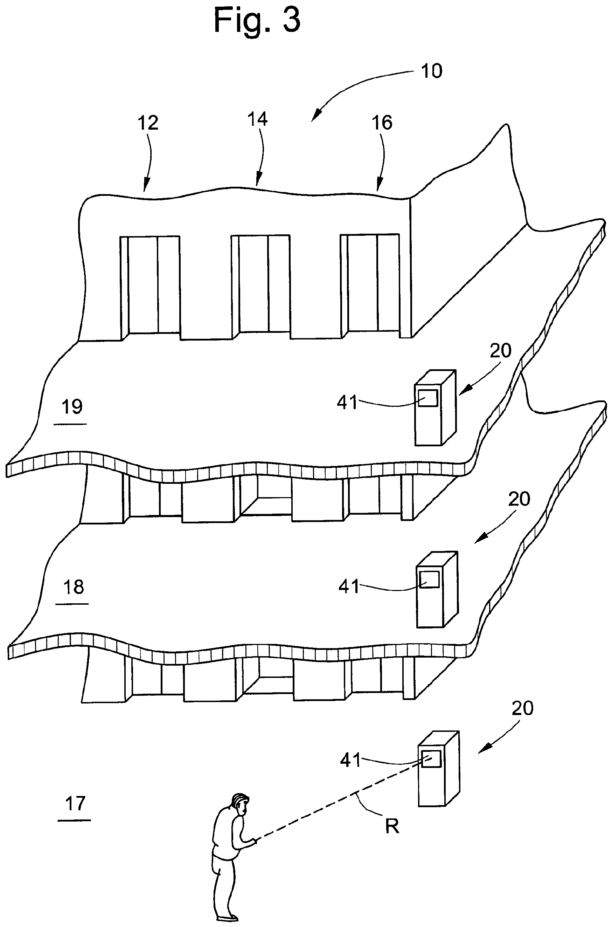

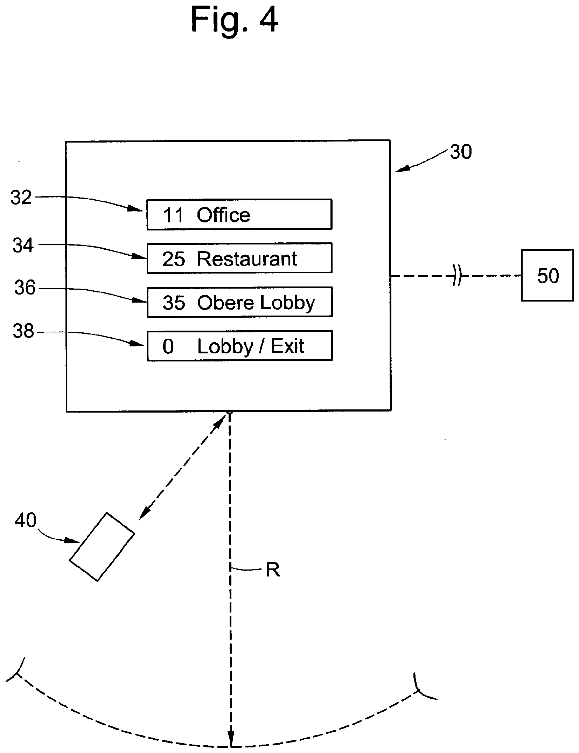

Fig. 1 und 3 zeigen schematisch eine Aufzugsanlage 10 eines Gebäudes mit einem ersten Aufzug 12, einem zweiten Aufzug 14 und einem dritten Aufzug 16, wobei die Aufzüge 12, 14, 16 in einem gemeinsamen Aufzugsschacht nebeneinander und unabhängig voneinander verkehren. Je nach Anwendungsfall können die Kabinen der Aufzüge 12, 14, 16 aber auch übereinander angeordnet sein und/oder in mehreren Aufzugsschächten verkehren. Ferner zeigt der dargestellte Ausschnitt des Gebäudes ein erstes Stockwerk 17, ein zweites Stockwerk 18 und ein drittes Stockwerk 19, wobei in jedem Stockwerk 17, 18, 19 jeweils eine Schachttür zu einem der Aufzüge 12, 14, 16 führt. Ferner ist auf jedem der Stockwerke 17, 18, 19 im Bereich der Aufzugsanlage 10 jeweils eine Zielrufeinrichtung 20 in Form eines Zielrufterminals vorgesehen. Wie in den Fig. 2 und 4 gezeigt, sind die Zielrufeinrichtungen 20 über wenigstens eine Datenleitung und/oder per Funknetz mit der Steuereinheit 50 verbunden.

In den Ausführungsbeispielen gemäss Fig. 1, 2 und 4 umfassen die Zielrufeinrichtungen 20 jeweils eine Funkfeldeinrichtung, vorzugsweise eine Nahfeldfunkeinrichtung mit einen Sende-/Empfangsteil, einer Auswähleinheit, einer Zeiteinheit, einer Speichereinheit und einen Bildschirm als Anzeigeeinrichtung 30. Der Bildschirm 30 stellt eine Bedienoberfläche mit mehreren Feldern 32, 34, 36, 38 bereit. Die Felder 32, 34, 36, 38 sind den ermittelten Zielrufen zugeordnet. Die Auswähleinheit umfasst eine Zeigereinheit mittels der ein Zeiger auf der Bedienoberfläche darstellbar ist. Der Zeiger wird mittels farblicher Hinterlegung und/oder eines Zeigersymbols auf dem Bildschirm 30 für den Benutzer optisch erkennbar abgebildet und dient dazu, ein bestimmtes Feld zu markieren und dadurch einen gewünschten Zielruf auszuwählen.

Auf Grundlage dieses Systems wird im Folgenden ein Verfahren zur Festlegung eines Zielrufes zur Benutzung der Aufzugsanlage 10 erläutert. Nachdem ein Benutzer das Gebäude in dem ersten Stockwerk 17 (Erdgeschoss) betreten hat, nähert sich der Benutzer der Aufzugsanlage 10. Sobald sich der Benutzer in der Nähe, d. h. in einer Reichweite R der Zielrufeinrichtung 20 befindet, wird zwischen der Zielrufeinrichtung 20 und einer von dem Benutzer mitgeführten Kommunikationseinheit 40 in Form eines Mobiltelefons und/oder einer RFID-Karte ein Nahfunkfeld generiert, das eine Datenkommunikation zwischen Zielrufeinrichtung 20 und Kommunikationseinheit 40 ermöglicht. Bei einem Nahfunkfeld zur Kommunikation mit einem Mobiltelefon beträgt die Reichweite R weniger als 10 Meter, bei einem Nahfunkfeld zur Kommunikation mit einer RFID-Karte beträgt die Reichweite R weniger als 1 Meter. Die Aktivierung der Datenkommunikation erfolgt vorzugsweise automatisch, kann aber auch durch den Benutzer selbst, beispielsweise mittels der Kommunikationseinheit 40 durch eine entsprechende Tasten- und/oder Spracheingabe, ausgelöst werden.

Nach Aufbau der Datenkommunikation erfolgt ein Datenaustausch zwischen Zielrufeinrichtung 20 und Kommunikationseinheit 40, wobei automatisch ein Identifikationscode zur Identifikation des Benutzers sowie ein Zugangsberechtigungscode von der Kommunikationseinheit 40 an die Zielrufeinrichtung 20 übermittelt wird.

Nach Empfang dieser beiden Codes kann die Zielrufeinrichtung 20 und/oder die Steuereinheit 50 feststellen, ob der Benutzer bereits bekannt ist und ob dieser Benutzer eine Zugangsberechtigung hat bzw. welchen Umfang diese Zugangsberechtigung umfasst. Anschliessend werden durch die Zielrufeinrichtung 20 und/oder die Steuereinheit 50 mehrere Zielrufe ermittelt und mittels der Zielrufeinrichtung 20 an den Benutzer bekannt gegeben. Vorzugsweise werden hierbei diejenigen Zielrufe bekannt gegeben, die der Benutzer am häufigsten verwendet.

Sollte es sich um einen neuen, das heisst noch nicht bekannten beziehungsweise identifizierten Benutzer handeln, kann eine Auflistung der Stockwerke als mögliche Fahrziele folgen.

Die Bekanntgabe der Zielrufe erfolgt durch optische Anzeige mehrerer Felder 32, 34, 36, 38 auf dem Bildschirm 30, wobei jedem Feld 32 bis 38 ein Zielruf zugeordnet ist. Beispielsweise können die in Fig. 2 den Felder 32 bis 38 zugeordneten Zielrufe ermittelt werden. So ist in jedem Feld 32 bis 38 zumindest ein Fahrziel in Form eines Stockwerks und gegebenenfalls eine zugehörige Bezeichnung angegeben. An oberster Stelle des Bildschirmes 30, d. h. im Feld 32 ist das entsprechend den Gewohnheiten des Benutzers am häufigsten ausgewählte Fahrziel angezeigt. Gleichzeitig ist dieses Feld 32 farblich hinterlegt. Diese farbliche Hinterlegung entspricht vorliegend dem durch die Auswähleinheit bereitgestellten Zeiger. Alternativ kann der Zeiger beziehungsweise das Zeigersymbol durch einen Pfeil oder dergleichen dargestellt werden.

In den vorliegenden Ausführungsbeispielen ist die Auswähleinheit derart eingerichtet, dass die Felder 32 bis 38 durch springende farbliche Hinterlegung nacheinander für einen Zeitraum von etwa 1 bis 2 Sekunden markiert sind. Auf diese Weise kann der Benutzer durch Positionsveränderung das gewünschte Feld und somit der gewünschte Zielruf markiert ist.

Gemäss den Ausführungsbeispielen der Fig. 1, 2 und 4 kann der Benutzer also das in der momentanen Situation hinterlegte Feld 32 durch Bewegen der Kommunikationseinheit 40 in einen Bereich ausserhalb des Nahfunkfeldes auswählen. Alternativ kann der Benutzer mit der Kommunikationseinheit 40 in der momentanen Position relativ zu der Zielrufeinrichtung 20 verbleiben, d. h. er bewegt die Kommunikationseinheit 40 im wesentlichen nicht, wodurch das während dieses Zeitraumes hinterlegte Feld und somit der zugeordnete Zielruf ausgewählt wird. Durch Bewegen oder Ruhighalten der Kommunikationseinheit 40 wird von der Nahfeldfunkeinrichtung ein mehr oder weniger starkes Funksignal erfasst, was in ein Zielrufauswahlsignal umgesetzt wird. Der Zeiger bewegt sich solange über die Felder 32, 34, 36, 38 wie die Kommunikationseinheit 40 innerhalb des Nahfunkfeldes gehalten wird und die Nahfeldfunkeinrichtung ein starkes Funksignal erfasst. Sobald der Benutzer die Kommunikationseinheit 40 ausserhalb des Nahfunkfeldes hält, erfasst die Nahfeldfunkeinrichtung kein Funksignal mehr, was in ein Zielrufauswahlsignal umgesetzt wird, dass den Zeiger über einem vom Benutzer gewünschten Feld stoppt und einen zugeordneten Zielruf auswählt.

Schliesslich kann der Benutzer, wie im Ausführungsbeispiel gemäss Fig. 3 gezeigt, auch seine Position relativ zu wenigstens einem Bewegungssensor 41 ändern. Der Bewegungssensor 41 kann im Bereich der Aufzugsanlage 10 oder auch innerhalb oder an der Zielrufeinrichtung 20 angeordnet sein. So kann auf jedem Stockwerk 17, 18, 19 im Bereich der Aufzugsanlage 10 ein Bewegungssensor 41 angeordnet sein. Solche Bewegungssensoren 41 sind dem Fachmann bekannt. Die Bewegungssensoren 41 sind über wenigstens eine Datenleitung und/oder per Funknetz mit den Zielrufeinrichtungen 20 und/oder der Steuereinheit 50 verbunden. Ein Bewegen oder Stillstehen des Benutzers wird vom Bewegungssensor 41 als positives oder negatives Bewegungssignal erfasst. Das Bewegungssignal wird über die Datenleitung an die Zielrufeinrichtungen 20 und/oder die Steuereinheit 50 übermittelt und dort zu wenigstens einem Zielrufauswahlsignal umgesetzt. Der Zeiger bewegt sich solange über die Felder 32, 34, 36, 38 wie sich der Benutzer nicht bewegt und der Bewegungssensor 41 ein negatives Bewegungssignal erfasst. Sobald sich der Benutzer bewegt, beispielsweise eine Hand hebt, erfasst der Bewegungssensor 41 ein positives Bewegungssignal, was in ein Zielrufauswahlsignal umgesetzt, dass den Zeiger über einem vom Benutzer gewünschten Feld stoppt und einen zugeordneten Zielruf auswählt.

Nach Auswahl des Zielrufes wird dieser an die Steuereinheit 50 übermittelt und ein geeigneter Aufzug zur Bedienung des Zielrufes ermittelt. Nachdem die Steuereinheit 50 den geeigneten Aufzug ermittelt hat, sendet die Steuereinheit 50 Informationsdaten zur Führung des Benutzers an die Zielrufeinrichtung 20, die beispielsweise optisch auf dem Bildschirm 30 bekannt gegeben werden. Alternativ oder zusätzlich können diese Informationen an die Kommunikationseinheit 40 gesendet werden. Anhand dieser Informationen kann sich der Benutzer zu dem entsprechenden Aufzug bewegen. Dieser weist sich insbesondere dann als sinnvoll, wenn sich der ermittelte Aufzug in einem von dem momentanen Standort entfernten Teil des Gebäudes befindet.

Sollte der Benutzer das durch das markierte Feld 32 von der Steuereinheit 50 empfohlene Fahrziel nicht als Zielruf wünschen, kann er diesen Zielruf durch Positionsveränderung verändern und einen anderen Zielruf auswählen. Beispielsweise kann er die Kommunikationseinheit 40 von der momentanen Position weiter von der Zielrufeinrichtung 20 weg bewegen, wodurch die farbliche Hinterlegung auf das zweite Feld 34 springt. Durch Verbleiben in dieser Position für einen gewissen Zeitraum wird der dem zweiten Feld 34 zugeordnete Zielruf markiert und ausgewählt und an die Steuereinheit 50 übermittelt.

Das Verfahren und die Aufzugsanlage 10 zeichnen sich insbesondere dadurch aus, dass der Benutzer den gewünschten Zielruf weitgehend berührungslos festlegen kann und er bei Bedarf die Auswahl des Zielrufes interaktiv ändern kann. Insbesondere muss der Benutzer die von einer Vielzahl von Personen benutzte Zielrufeinrichtung 20 nicht berühren, um den gewünschten Zielruf abzugeben oder verändern zu können.

## Patentansprüche

1. Verfahren zur Festlegung eines Zielrufes zur Benutzung einer Aufzugsanlage (10) mit einer Steuereinheit (50) und wenigstens einer Zielrufeinrichtung (20), **dadurch gekennzeichnet:**
**dass** eine Datenkommunikation zwischen der Zielrufeinrichtung (20) und einer von dem Benutzer mitgeführten Kommunikationseinheit (40) innerhalb einer bestimmten Reichweite (R) eines Funkfeldes der Zielrufeinrichtung (20) aktiviert wird;
**dass** anhand eines von der Kommunikationseinheit (40) an die Zielrufeinrichtung (20) gesendeten Identifikationssignals von der Zielrufeinrichtung (20) und/oder Steuereinheit (50) festgestellt wird, ob der Benutzer der Kommunikationseinheit (40) bekannt ist,
**dass** anhand der Feststellung von der Zielrufeinrichtung (20) mehrere Zielrufe bereitgestellt werden und
**dass** der gewünschte Zielruf dadurch ausgewählt wird, in dem die Kommunikationseinheit (40) bewegt oder im Wesentlichen ruhig gehalten wird.

2. Verfahren nach Anspruch 1, **dadurch gekennzeichnet, dass** als Kommunikationseinheit (40) ein Mobiltelefon und/oder eine RFID-Karte verwendet wird
und/oder dass das Funkfeld ein Nahfunkfeld ist und durch Bewegen der Kommunikationseinheit (40) aus dem Nahfunkfeld heraus der Zielruf ausgewählt wird
und/oder dass das Funkfeld ein Nahfunkfeld ist und durch Bewegen der Kommunikationseinheit (40) aus dem Nahfunkfeld heraus der Zielruf ausgewählt wird; und dass die Reichweite (R) des Nahfunkfeldes weniger als etwa 10 m, vorzugsweise weniger als 1 Meter beträgt
und/oder dass das Funkfeld ein Nahfunkfeld ist und durch Bewegen der Kommunikationseinheit (40) aus dem Nahfunkfeld heraus der Zielruf ausgewählt wird; und dass eine Datenkommunikation zwischen der Zielrufeinrichtung (20) und der Kommunikationseinheit (40) innerhalb des Nahfunkfeldes selbsttätig aktiviert wird.

3. Verfahren nach einem der Ansprüche 1 oder 2, **dadurch gekennzeichnet, dass** ein Benutzer durch ein Bewegen oder im Wesentlichen Ruhighalten positioniert wird; dass ein Bewegen des Benutzers als positives oder negatives Bewegungssignal erfasst wird; und dass das erfasste Bewegungssignal in ein Zielrufauswahlsignal umgesetzt wird.

4. Verfahren nach Anspruch 3, **dadurch gekennzeichnet, dass** ein Bewegungssignal des Benutzers durch wenigstens einen Bewegungssensor (41) selbsttätig erkannt wird.

5. Verfahren nach einem der Ansprüche 1 oder 3, **dadurch gekennzeichnet, dass** auf einem Bildschirm (30) der Zielrufeinrichtung (20) mehrere Felder (32, 34, 36, 38) und ein Zeiger angezeigt werden, wobei jedem Feld (32, 34, 36, 38) ein Zielruf zugeordnet ist; und dass der Zeiger gemäss dem Zielrufauswahlsignal über die Felder (32, 34, 36, 38) geführt wird
und/oder dass auf einem Bildschirm (30) der Zielrufeinrichtung (20) mehrere Felder (32, 34, 36, 38) und ein Zeiger angezeigt werden, wobei jedem Feld (32, 34, 36, 38) ein Zielruf zugeordnet ist und dass der Zeiger gemäss dem Zielrufauswahlsignal über die Felder (32, 34, 36, 38) geführt wird; dass der Zeiger über die Felder (32, 34, 36, 38) geführt wird, solange ein negatives Bewegungssignal erfasst wird; und dass der Zeiger über einem Felder (32, 34, 36, 38) gestoppt wird, sobald ein positives Bewegungssignal erfasst wird.

6. Verfahren nach Anspruch 5, **dadurch gekennzeichnet, dass** der Zeiger nach einem vorbestimmten Zeitintervall in einer bestimmten Reihenfolge über die einzelnen Felder (32, 34, 36, 38) geführt wird und/oder dass der Zeiger nach einem vorbestimmten Zeitintervall in einer bestimmten Reihenfolge über die einzelnen Felder (32, 34, 36, 38) geführt wird, dass der Zeiger über einem Feld (32, 34, 36, 38) auf dem Bildschirm (30) gestoppt wird, dass dieses Feld (32, 34, 36, 38) markiert wird und dass der dem Feld (32, 34, 36, 38) zugeordnete Zielruf ausgewählt wird.

7. Verfahren nach Anspruch 1, **dadurch gekennzeichne**t, dass das übermittelte Identifikationssignal von der Zielrufeinrichtung (20) überprüft wird und dass das Ermitteln mehrerer Zielrufe und die Bekanntgabe der Zielrufe an den Benutzer nur erfolgt, wenn die Überprüfung des Identifikationssignals erfolgreich ist.

8. Verfahren nach einem der Ansprüche 1 bis 7, d**adurch gekennzeichnet**, dass vom Benutzer ein Zugangsberechtigungscode an die Zielrufeinrichtung (20) übermittelt wird; und dass der Zugangsberechtigungscode daraufhin überprüft wird, ob der Benutzer eine Zugangsberechtigung hat.

9. Verfahren nach einem der Ansprüche 1 bis 8, **dadurch gekennzeichnet, dass** Informationen zur Führung des Benutzers zu einem Aufzug der Aufzugsanlage (10) an die Zielrufeinrichtung (20) übermittelt werden
und/oder dass Informationen zur Führung des Benutzers zu einem Aufzug der Aufzugsanlage (10) an die Kommunikationseinheit (40) übermittelt werden.

10. Verfahren nach einem der Ansprüche 1 bis 9,
, dass wenigstens einer der Zielrufe von der Zielrufeinrichtung (20) empfohlen wird
und/oder dass die Zielrufe grösster Wahrscheinlichkeit bekannt gegeben werden
und/oder dass die ermittelten und/oder bekannt gegebenen Zielrufe gespeichert werden
und/oder dass die Zielrufe akustisch, optisch und/oder durch Vibration mittels der Zielrufeinrichtung (20) angezeigt werden und/oder dass Informationen zur Führung des Benutzers zu einem Aufzug der Aufzugsanlage (10) an die Kommunikationseinheit (40) übermittelt werden; und dass die Zielrufe akustisch, optisch und/oder durch Vibration mittels der Kommunikationseinrichtung (40) angezeigt werden.

11. Aufzugsanlage (10) mit wenigstens einem Aufzug (12, 14, 16), einer Steuereinheit (50) und wenigstens einer Zielrufeinrichtung (20), wobei die Zielrufeinrichtung (20) mehrerer Zielrufe an den Benutzer bekannt gibt, **dadurch gekennzeichne**t: dass die Zielrufeinrichtung zum Aktivieren einer Datenkommunikation mit einer vom Benutzer mitgeführten Kommunikationseinheit (40) innerhalb einer bestimmten Reichweite (R) eines Funkfeldes der Zielrufeinrichtung (20) vorgesehen ist, dass die Zielrufeinrichtung (20) und/oder Steuereinheit zur Feststellung einer Bekanntheit des Benutzers anhand eines von der Kommunikationseinheit (40) an die Zielrufeinrichtung (20) gesendeten Identifikationssignals, dass die Zielrufeinrichtung (20) zum Bereitstellen mehrerer Zielrufe anhand der Feststellung vorgesehen ist und dass die Kommunikationseinheit (40) zum Auswählen des gewünschten Zielrufs vorgesehen ist, indem sie sich bewegt oder im Wesentlichen ruhig verhält.

12. Aufzugsanlage nach Anspruch 11, **dadurch gekennzeichnet, dass** ein Bewegungssensor (41) ein Bewegen des Benutzers als positives oder negatives Bewegungssignal erfasst; und dass die Zielrufeinrichtung (20) und/oder die Steuereinheit (50) das Bewegungssignal in ein Zielrufauswahlsignal umsetzt.

13. Aufzugsanlage nach Anspruch 12, **dadurch gekennzeichne**t, dass die Kommunikationseinheit (40) ein Mobiltelefon und/oder eine RFID-Karte ist
und/oder dass das Funkfeld ein Nahfunkfeld ist
und/oder dass die Zielrufeinrichtung (20) einen Bildschirm (30) umfasst, auf dem mehrere den Zielrufen zugeordneten Felder (32, 34, 36, 38) abbildbar sind; und dass mittels der Auswähleinheit ein Zeiger gemäss dem Zielrufauswahlsignal auf dem Bildschirm (30) abbildbar und zu einem der Felder (32, 34, 36, 38) bewegbar ist, um einen Zielruf auszuwählen
und/oder dass die Zielrufeinrichtung (20) einen Bildschirm (30) umfasst, auf dem mehrere den Zielrufen zugeordneten Felder (32, 34, 36, 38) abbildbar sind: dass mittels der Auswähleinheit ein Zeiger gemäss dem Zielrufauswahlsignal auf dem Bildschirm (30) abbildbar und zu einem der Felder (32, 34, 36, 38) bewegbar ist, um einen Zielruf auszuwählen; und dass die Auswähleinheit derart eingerichtet ist, dass der Zeiger nach einem vorbestimmten Zeitintervall selbsttätig von einem ersten Feld (32) zu einem zweiten Feld (34) bewegt wird und/oder dass mehrere Zielrufeinrichtungen (20) vorgesehen sind, wobei im Bereich jedes Aufzuges (12, 14, 16) und/oder jedes Stockwerkes (17, 18, 19) wenigstens eine Zielrufeinrichtung (20) angeordnet ist.

## Claims

1. Method of detecting a destination call for use of a lift installation (10) with a control unit (50) and at least one destination call device (20), **characterised in that**:
a data communication between the destination call device (20) and a communications unit (40), which is carried by the user, is activated within a specific range (R) of a radio link section of the destination call device (20);
it is determined by the destination call device (20) and/or control unit (50) on the basis of an identification signal transmitted by the communications unit (40) to the destination call device (20) whether the user of the communications unit (40) is known,
a plurality of destination calls is provided on the basis of the determination by the destination call device (20) and
the desired destination call is selected **in that** the communications unit (40) is moved or is kept substantially still.

2. Method according to claim 1, **characterised in that** a mobile telephone and/or an RFID card is used as communications unit (40) and/or that the radio link section is a near radio link section and the destination call is selected by movement of the communications unit (40) out of the near radio link section and/or that the radio link section is a near radio link section and the destination call is selected by movement of the communications unit (40) out of the near radio link section; and that the range (R) of the near radio link section is less than approximately 10 metres, preferably less than 1 metre, and/or that the radio link section is a near radio link section and the destination call is selected by movement of the communications unit (40) out of the near radio link section; and that a data communication between the destination call device (20) and the communications unit (40) within the near radio link section is automatically activated.

3. Method according to claim 1 or claim 2, **characterised in that** a user is positioned by a movement or by substantially keeping still; that a movement of the user is detected as positive or negative movement signal; and that the detected movement signal is converted into a destination call selection signal.

4. Method according to claim 3, **characterised in that** a movement signal of the user is automatically recognised by at least one movement sensor (41).

5. Method according to one of claims 1 and 3, **characterised in that** several fields (32, 34, 36, 38) and an indicator are displayed on a screen (30) of the destination call device (20), wherein a destination call is associated with each field (32, 34, 36, 38); and that the indicator is guided over the fields (32, 34, 36, 38) in accordance with the destination call selection signal, and/or that several fields (32, 34, 36, 38) and an indicator are displayed on a screen (30) of the destination call device (20), wherein a destination call is associated with each field (32, 34, 36, 38) and that the indicator is guided over the fields (32, 34, 36, 38) in accordance with the destination call selection signal; that the indicator is guided over the fields (32, 34, 36, 38) as long as a negative movement signal is detected; and that the indicator is stopped over a field (32, 34, 36, 38) as soon as a positive movement signal is detected.

6. Method according to claim 5, **characterised in that** the indicator is guided over the individual fields (32, 34, 36, 38) in a defined sequence after a predetermined period of time and/or that the indicator is guided over the individual fields (32, 34, 36, 38) in a defined sequence after a predetermined period of time, that the indicator is stopped over a field (32, 34, 36, 38) on the screen (30), that this field (32, 34, 36, 38) is marked and that the destination call associated with the field (32, 34, 36, 38) is selected.

7. Method according to claim 1, **characterised in that** the communicated identification signal is checked by the destination call device (20) and the ascertaining of several destination calls and making known the destination calls to the user are carried out only when the check of the identification signal is successful.

8. Method according to any one of claims 1 to 7, **characterised in that** an access authorisation code is communicated by the user to the destination call device (20); and the access authorisation.

9. Method according to any one of claims 1 to 8, **characterised in that** data for guidance of the user to a lift of the lift installation (10) are communicated to the destination call device (20) and/or that data for guidance of the user to a lift of the lift installation (10) are communicated to the communications unit (40).

10. Method according to any one of claims 1 to 9, **characterised in that** at least one of the destination calls is recommended by the destination call device (20) and/or that the destination calls of greatest probability are made known and/or that the ascertained and/or made-known destination calls are stored and/or that the destination calls are indicated acoustically, optically and/or by vibration by means of the destination call device (20) and/or that data for guidance of the user to a lift of the lift installation (10) are communicated to the communications unit (40); and that the designation calls are indicated acoustically, optically and/or by vibration by means of the communications device (40).

11. Lift installation (10) with at least one lift (12, 14, 16), a control unit (50) and at least one destination call device (20), wherein the destination call device (20) makes known several destination calls to the user, **characterised in that**: the destination call device is provided for activation of a data communication with a communications unit (40), which is carried by the user, within a specific range (R) of a radio link section of the destination call device (20), the destination call device (20) and/or control unit is or are provided for determination of knowledge of the user on the basis of an identification signal transmitted by the communications unit (40) to the destination call device (20), the destination call device (20) is provided for provision of a plurality of destination calls on the basis of the determination and the communications unit (40) is provided for selection of the desired destination call **in that** it moves or remains substantially still.

12. Lift installation according to claim 11, **characterised in that** a movement sensor (41) detects a movement of the user as a positive or negative movement signal; and that the destination call device (20) and/or the control unit (50) converts the movement signal into a destination call section signal.

13. Lift installation according to claim 12, **characterised in that** the communications unit (40) is a mobile telephone and/or an RFID card and/or that the radio link section is a near radio link section and/or that the destination call device (20) comprises a screen (30) on which several fields (32, 34, 36, 38) associated with the destination calls can be imaged; and that an indicator can be imaged on the screen (30) means of the selecting unit in accordance with the destination call selection signal and is movable to one of the fields (32, 34, 36, 38) in order to select a destination call and/or that the destination call device (20) comprises a screen (30) on which several fields (32, 34, 36, 38) associated with the destination calls can be imaged; that an indicator can be imaged on the screen (30) by means of the selecting unit in accordance with the destination call selection signal and is movable to one of the fields (32, 34, 36, 38) in order to select a destination call; and that the selecting unit is so arranged that the indicator is automatically moved after a predetermined period of time from a first field (32) to a second field (34) and/or that several destination call devices (20) are provided, wherein at least one destination call device (20) is arranged in the region of each lift (12, 14, 16) and/or each storey (17, 18, 19).

## Revendications

1. Procédé pour fixer un appel de destination en vue de l'utilisation d'une installation d'ascenseur (10) avec une unité de commande (50) et au moins un dispositif d'appel de destination (20), **caractérisé :**
**en ce qu'**une communication de données entre le dispositif d'appel de destination (20) et une unité de communication (40) que l'utilisateur porte sur soi est activée à l'intérieur d'une portée définie (R) d'un champ radio du dispositif d'appel de destination (20),
**en ce qu'**à l'aide d'un signal d'identification envoyé par l'unité de communication (40) au dispositif d'appel de destination (20), le dispositif d'appel de destination (20) et/ou l'unité de commande (50) déterminent si l'utilisateur de l'unité de communication (40) est connu,
**en ce qu'**à l'aide de ce qui a été déterminé, le dispositif d'appel de destination met en place plusieurs appels de destination, et
**en ce que** l'appel de destination souhaité est sélectionné grâce au fait que l'unité de communication (40) est déplacée ou est maintenue globalement immobile.

2. Procédé selon la revendication 1, **caractérisé en ce qu'**on utilise comme unité de communication (40) un téléphone mobile et/ou une carte RFID,
et/ou **en ce que** le champ radio est un champ radio proche, et c'est grâce au déplacement de l'unité de communication (40) hors du champ radio proche que l'appel de destination est sélectionné
et/ou **en ce que** le champ radio est un champ radio proche, et c'est grâce au déplacement de l'unité de communication (40) hors du champ radio proche que l'appel de destination est sélectionné ; et **en ce que** la portée (R) du champ radio proche est de moins de 10 m environ, de préférence de moins de 1 mètre
et/ou **en ce que** le champ radio est un champ radio proche, et c'est grâce au déplacement de l'unité de communication (40) hors du champ radio proche que l'appel de destination est sélectionné ; et **en ce qu'**une communication de données entre le dispositif d'appel de destination (20) et l'unité de communication (40) est activée automatiquement à l'intérieur du champ radio proche.

3. Procédé selon l'une des revendication 1 ou 2, **caractérisé en ce qu'**un utilisateur se positionne en se déplaçant ou en restant globalement immobile ; **en ce qu'**un déplacement de l'utilisateur est détecté sous la forme d'un signal de déplacement positif ou négatif, et **en ce que** le signal de déplacement détecté est converti en signal de sélection d'appel de destination.

4. Procédé selon la revendication 3, **caractérisé en ce qu'**un signal de déplacement de l'utilisateur est reconnu automatiquement par au moins un capteur de déplacement (41).

5. Procédé selon l'une des revendications 1 ou 3, **caractérisé en ce que** plusieurs champs (32, 34, 36, 38) et un pointeur s'affichent sur un écran (30) du dispositif d'appel de destination (20), un appel de destination étant associé à chaque champ (32, 34, 36, 38) ; et **en ce que** le pointeur passe sur les champs (32, 34, 36, 38) suivant le signal de sélection d'appel de destination
et/ou **en ce que** plusieurs champs (32, 34, 36, 38) et un pointeur s'affichent sur un écran (30) du dispositif d'appel de destination (20), un appel de destination étant associé à chaque champ (32, 34, 36, 38) et **en ce que** le pointeur passe sur les champs (32, 34, 36, 38) suivant le signal de sélection d'appel de destination ; **en ce que** le pointeur passe sur les champs (32, 34, 36, 38) tant qu'un signal de déplacement négatif est détecté ; et en que le pointeur s'arrête sur l'un des champs (32, 34, 36, 38) dès qu'un signal de déplacement positif est détecté.

6. Procédé selon la revendication 5, **caractérisé en ce que** le pointeur, après un laps de temps prédéfini, passe sur les champs individuels (32, 34, 36, 38) dans un ordre défini, **en ce que** le pointeur s'arrête sur un champ (32, 34, 36, 38) sur l'écran (30), **en ce que** ce champ (32, 34, 36, 38) est marqué et **en ce que** l'appel de destination associé au champ (32, 34, 36, 38) est sélectionné.

7. Procédé selon la revendication 1, **caractérisé en ce que** le signal d'identification transmis est vérifié par le dispositif d'appel de destination (20) et **en ce que** la détermination de plusieurs appels de destination et le signalement des appels de destination à l'utilisateur ne se font que si la vérification du signal d'identification est réussie.

8. Procédé selon l'une des revendications 1 à 7, **caractérisé en ce qu'**un code d'autorisation d'accès est transmis par l'utilisateur au dispositif d'appel de destination (20) ; et **en ce que** le code d'autorisation d'accès est vérifié pour voir si l'utilisateur a une autorisation d'accès.

9. Procédé selon l'une des revendications 1 à 8, **caractérisé en ce que** des informations pour guider l'utilisateur jusqu'à un ascenseur de l'installation d'ascenseur (10) sont transmises au dispositif d'appel de destination d'appel (20)
et/ou **en ce que** des informations pour guider l'utilisateur jusqu'à un ascenseur de l'installation d'ascenseur (10) sont transmises à l'unité de communication (40).

10. Procédé selon l'une des revendications 1 à 9, **caractérisé en ce que** l'un au moins des appels de destination sont recommandés par le dispositif d'appel de destination (20)
et/ou **en ce que** les appels de destination avec la plus grande probabilité sont signalés
et/ou les appels de destination déterminés et/ou signalés sont mis en mémoire
et/ou **en ce que** les appels de destination sont indiqués à l'aide du dispositif d'appel de destination (20) par voie acoustique, optique et/ou par vibrations
et/ou **en ce que** des informations pour guider l'utilisateur jusqu'à un ascenseur de l'installation d'ascenseur (10) sont transmises à l'unité de communication (40) ; et **en ce que** les appels de destination sont indiqués à l'aide du dispositif de communication (40) par voie acoustique, optique et/ou par vibrations.

11. Installation d'ascenseur (10) avec au moins un ascenseur (12, 14, 16), une unité de commande (50) et au moins un dispositif d'appel de destination (20), le dispositif d'appel de destination (20) signalant plusieurs appels de destination à l'utilisateur, **caractérisée : en ce que** le dispositif d'appel de destination est prévu pour activer une communication de données avec une unité de communication (40) que l'utilisateur porte sur soi, à l'intérieur d'une portée définie (R) d'un champ radio du dispositif d'appel de destination (20), **en ce que** le dispositif d'appel de destination (20) et/ou l'unité de commande sont prévus pour déterminer à l'aide d'un signal d'identification envoyé par l'unité de communication (40) au dispositif d'appel de destination (20) que l'utilisateur de l'unité de communication (40) est connu, **en ce que** le dispositif d'appel de destination (20) est prévu pour mettre en place plusieurs appels de destination à l'aide de cette détermination, et **en ce que** l'unité de communication (40) est prévue pour sélectionner l'appel de destination souhaité, en se déplaçant ou en restant globalement immobile.

12. Installation d'ascenseur selon la revendication 11, **caractérisée en ce qu'**un capteur de déplacement (41) détecte un déplacement de l'utilisateur sous la forme d'un signal de déplacement positif ou négatif ; et **en ce que** le dispositif d'appel de destination (20) et/ou l'unité de commande (50) convertissent le signal de déplacement en signal de sélection d'appel de destination.

13. Installation d'ascenseur selon la revendication 12, **caractérisée en ce que** l'unité de communication (40) est un téléphone mobile et/ou une carte RFID
et/ou **en ce que** le champ radio est un champ radio proche
et/ou **en ce que** le dispositif d'appel de destination (20) comprend un écran (30) sur lequel plusieurs champs (32, 34, 36, 38) associés aux appels de destination peuvent être représentés ; et **en ce qu'**à l'aide de l'unité de sélection, un pointeur peut être représenté sur l'écran (30) suivant le signal de sélection d'appel de destination et peut être déplacé jusqu'à l'un des champs (32, 34, 36, 38) afin de sélectionner l'appel de destination ; et **en ce que** l'unité de sélection est installée de telle sorte que le pointeur, après un laps de temps prédéfini, soit déplacé automatiquement d'un premier champ (32) jusqu'à un deuxième champ (34)
et/ou **en ce que** plusieurs dispositifs d'appel de destination (20) sont prévus, au moins un dispositif d'appel de destination étant disposé dans la zone de chaque ascenseur (12, 14, 16) et/ou de chaque étage (17, 18, 19).
